# EUROPEAN PATENT SPECIFICATION

(11) **EP 3 319 456 B1**
(45) Date of publication and mention of the grant of the patent: **31.08.2022**
(21) Application number: 16744981.8
(22) Date of filing: 07.07.2016
(51) Int. Cl.: A23G 9/32, A23G 9/34, A23G 9/42

(54) **REDUCED-FAT FROZEN CONFECTION**
FETTREDUZIERTES EISKONFEKT
CONFISERIE CONGELÉE À FAIBLE TENEUR EN GRAISSES

(30) Priority: 07.07.2015 EP 15175598
(43) Date of publication of application: 16.05.2018
(73) Proprietor: Cargill, Incorporated, Wayzata, MN 55391 (US)
(72) Inventor: BAREY, Philippe, 50500 Baupte (FR)
(74) Representative: Morariu Radu, Mihai Dorin
(86) International application number: PCT/US2016/041274
(87) International publication number: WO 2017/007894

(56) References cited:
- EP-A1- 1 570 746
- EP-A1- 2 025 240
- WO-A1-2007/112504
- WO-A1-2008/046732
- WO-A1-2012/072335
- WO-A2-2005/058057
- CRIZEL T DE M ET AL: "Orange fiber as a novel fat replacer in lemon ice cream", CIENCIA E TECNOLOGIA DE ALIMENTOS, SOCIEDADE BRASILEIRA DE CIENCIA E TECNOLOGIA DE ALIMENTOS, CAMPINAS, BR , vol. 34, no. 2 1 December 2014 (2014-12-01), pages 332-340, XP008178395, ISSN: 0101-2061 Retrieved from the Internet: URL:http://www.scielo.br/pdf/cta/v34n2/17. pdf [retrieved on 2016-01-07]
- DERVISOGLU M ET AL: "The effect of citrus fibre on the physical, chemical and sensory properties of ice cream", FOOD SCIENCE AND TECHNOLOGY INTERNATIONAL, SAGE PUBLICATIONS, NEW YORK, NY, US, vol. 12, no. 2, 1 April 2006 (2006-04-01), pages 159-164, XP008178396, ISSN: 1082-0132, DOI: 10.1177/1082013206064005

## Description

### FiELD OF THE INVENTION

The present invention relates to a reduced-fat frozen confection comprising a stabilizer and at most 6 wt% of fat relative to the total weight of the confection. The invention further relates to various embodiments of the frozen confection such as ice cream, milk ice, frozen desserts, frozen yoghurt, frozen purees, sorbet and the like.

### BACKGROUND OF THE INVENTION

In recent years, reduced-fat frozen confections (RFFC) have become a significant, growing segment of the frozen confections market. Increasingly, a focus of modern preventive medicine is weight reduction since excessive weight is frequently cited in reports concerning the surge in cases of type 2 diabetes and heart diseases. Formulators of frozen confections, as well as academics and others, have thus attempted to provide products having fewer calories, lower levels of fat, and various other features desired by consumers for one reason or another. However, with reducing the level of fat in the frozen confection, considerable difficulties may arise, as the effectiveness of fat in stabilizing the confection's structure is reduced. Insufficiently stable products are not robust to the cold chain and may he unacceptable to consumers. In addition, body or textural defects of RFFC may also negatively influence organoleptic properties such as creaminess and smoothness.

A particularly common textural defect in RFFC results from the formation of ice crystals, a problem often aggravated when the RFFC products are subjected to temperature fluctuations. Thus, in order to preserve quality, e.g. creaminess and smoothness, RFFC products have to be handled and stored with care. Unfortunately however, RFFC products are almost always subjected to temperature fluctuations that may occur during storage, distribution and handling. For example, temperature fluctuations typically occur when a consumer buys a frozen product and does not consume it right away, as in the time from when a consumer purchases such a product at a grocer and places that product in his freezer. Partial or even substantial defrosting of the product can occur before it is refrozen. This temperature cycling can result in ice crystal growth in the product, as well as loss in product shape. Such crystal growth may affect both the visual appearance and organoleptic properties of the RFFC product, thereby reducing its quality and appeal, at least as perceived by the consumer. Therefore it is desirable for RFFC to be stable against 'heat shocks', or cyclic conditions of partial thawing and refreezing that occur during typical storage, shipping and handling of these products.

To overcome the above challenges, various solutions were proposed. Stabilizers were typically used for shape reinforcement and firmness retention of RFFC. Conventional stabilizers tipically contain a mixture of hydrocolloids and emulsifiers, with various hydrocolloids being used such as carrageenan, alginate, locust bean gum, guar gum, tara gum, xanthan gum, microcrystalline cellulose and carboxymethylcellulose (CMC). Examples of typically used emulsifiers include low hydrophilic-lipophilic balanced (HLB) emulsifiers such as mono and diglycerides or fatty acids (E471) and high HLB emulsifiers such as polyoxyethylene (20) sorbitan monooleate (polysorbate 80).

For example, GB 1,484,167 (Kraftco) is directed to a milk shake containing a stabilizer such as sodium CMC, sodium alginate, propylene glycol alginates, locust bean gums and guar gums, preferably in mixtures. Emulsifiers can be included too.

According to the English language abstract of Tvorogova et al. Kholodilnaya Tekhnika 1996, No. 3, 20-21, use of stabilizers in ice creams is discussed with respect to foaming, emulsifying and gelling properties. Stabilizers included starch, gelatin, methyl cellulose, carboxymethyl cellulose, wheat flour, pectin, carrageenan, Cremodan and skim milk.

US 5,456,936 is directed to a substantially lactose- and sugar-free, low calorie frozen confection having a 20% to 100% overrun. The confection may contain gums such as locust bean gum, carrageenan, xanthan gum, guar and carboxymethyl cellulose. Cellulose gel can also be used as a stabilizer.

Although the above mentioned stabilizers may effectively stabilize typical (high fat) frozen confections, in case of RFFC they may be less effective. For example, stabilizers may deleteriously influence the organoleptics of RFFC; and in addition, they may not perform well enough to maintain acceptable, textures and shelflife thereof.

Natural compounds exist however which influence less negatively the organoleptic properties of RFFC and one of them is citrus fiber. Citrus fibers are known for example from WO2007/003391; WO2008/062057; WO2006/033697; WO2010/093864; WO2012/016190 and WO2013/109721 together with their use in various end products. The use of citrus fiber in frozen confections is also known for example from "Orange fiber as a novel fat replacer in lemon ice cream", Tainara de Moraes Crizel et al., Food Science and Technology, Campinas, 34(2): 332-340, Apr-June 2014; "The effect of citrus fiber on the physical, chemical and sensory properties of ice cream", M. Dervisoglu et al. Food. Sci. Tech. Int. 2006; 12(2):159-164; but also from EP 2 645 873; EP 2 025 240, WO2008/046732, WO2007/112504 and WO2012/072335..

Dervisoglu et al. for example showed that a stabilizer containing citrus fiber and an emulsifier had a positive influence on physical and sensory properties of ice creams having a fat level around 7 wt%. They concluded that better results are achieved when increasing the amount of citrus fiber to the expense of the emulsifier. According to their investigation, however, the citrus fibers had a very strong negative effect on the viscosity of the ice cream with viscosities of no lower than 16900 cp being obtained when measured at room temperature (about 20 ⁰C). Also the meltdown of the ice cream was still unsatisfactory. Finally, the authors concluded that citrus fiber and emulsifiers can be incorporated into an ice cream mix up to a total maximum concentration of 0.8% in order to have satisfactory results.

Therefore, a developer of RFFC using a stabilizer containing citrus fibers, may face a challenge in providing products having optimal stability. A need is therefore felt in the industry to provide an understanding of the proper use of the ingredients typically present in a RFFC in order to achieve maximum benefits. In particular there is a need for RFFC containing a stabilizer comprising citrus fibers, which do not melt away too quickly at ambient temperature so as, for example, retain their shape and firmness during the period of consumption. There is also a need for such RFFC with optimal viscosity and extrusion capacity to allow for an optimal processing thereof. There is also a need for RFFC having excellent organoleptic properties.

Therefore, although citrus fiber is a consumer-acceptable ingredient due to its natural origins, it would still be advantageous to find new, improved ways to enhance its performance in RFFC such as to increase its stabilizing functionality while preserving a mouthfeel equivalent to that of a full fat product too.

### SUMMARY OF THE INVENTION

The present invention provides a frozen confection comprising a stabilizer and between 1.50 and 5.50 wt% of fat relative to the total weight of the confection, wherein the stabilizer contains an emulsifier (EM) and citrus fibers (CF) wherein the emulsifier and the citrus fibers are in a weight ratio EM:CF of between 0.25 and 1.00.

### DETAILED DESCRIPTION OF THE INVENTION

In the food industry, the term "frozen confections" is a market category that encompasses a wide variety of products served at temperatures below the freezing point of water. Frozen confections include dairy-based confections such as ice cream, ice milk, milk shakes, sherbet, gelato, frozen yoghurt, soft serve ice cream; non-dairy based confections such as mellorine, sorbet and water ices; and specialty confections such as frozen novelties, e.g. bars, cones, sandwiches and those available of a stick. As used herein, a frozen confection refers to a product in which water may be present in both the liquid and frozen state.

To inventors knowledge, the present invention provides for the first time an optimum balance of essential ingredients, e.g. at least in terms of their nature and of their amounts, which may impart optimum properties to an RFFC containing thereof. These essential ingredients are fat, emulsifier and citrus fibers in carefully chosen amounts.

In particular, the present invention uses both an emulsifier and citrus fibers in a specific weight ratio in order to provide a frozen confection with the right organoleptic properties as well as optimal stability. In the known RFFC using stabilizers containing emulsifiers and hydrocolloids or citrus fibers to achieve product stability or acceptable organoleptic properties, the effects of the various components of the stabilizer are not properly balanced. These known RFFC have either improved product stability while having an undesirable texture, either the opposite is obtained. For example if the content of the hydrocolloids or citrus fibers is too low and that of the emulsifier is too high the RFFC may be hard with unsuitable (mouth-)melting behavior, whereas in case of the opposite the RFFC may have a gummy, gel-like texture as well as off flavors. By using citrus fibers as part of the stabilizer in the right amount with respect to the emulsifier, the present invention provides an RFFC having optimum product stability and organoleptic properties.

A further complication arises when the fat content is brought into the stability equation. The present invention however succeeded in providing a proper balance of the essential ingredients in order to achieve unexpected synergies thereof leading to optimal properties of the RFFC.

By stabilizer is herein understood a system comprising an emulsifier and citrus fibers, which has a predominant role in stabilizing the properties, e.g. texture, viscosity, meltdown, etc. of the RFFC of the invention under various conditions.

In one embodiment, the emulsifier used in accordance to the invention is produced by alcohol esterification of a fat containing fatty acids preferably having C8 to C18 carbon chains, e.g. oleic, stearic or palmitic fatty acids. Preferably sorbitol, polyglycerol or propyleneglycol are used as the alcohol.

In another embodiment, the emulsifier used in accordance to the invention is produced by glycerol trans-esterification of a fat. Example of suitable fats include without limitation palm oil, sunflower oil, rape-seed oil, cotton oil and soya oil. The mono and di-glycerides of fatty acids are obtained from this last process.

Preferably, the emulsifier is chosen from a group consisting of mono and diglycerides; distilled monoglycerides; mono- and diglycerides of saturated or unsaturated fatty esters; diacetyl tartaric acid esters of mono- and diglycerides (DATEM); modified lecithin; polysorbate 20, 40, 60 or 80; sodium stearyl lactylate; propylene glycol monostearate; succinylated mono- and diglycerides; acetylated mono- and diglycerides; propylene glycol mono- and diesters of fatty acids; polyglycerol esters of fatty acids; lactylic esters of fatty acids; glyceryl monosterate; propylene glycol monopalmitate; glycerol lactopalmitate and glycerol lactostearate; and mixtures thereof. The emulsifiers may be used independently, or two or more kinds may be used in combination.

The emulsifier is present in the frozen confection in an amount of between 0.1 and 1.0 wt%, relative to the total weight of said confection, more preferably between 0.2 and 0.7 wt%, most preferably between 0.3 and 0.5 wt%. Preferably, the emulsifier is present in the frozen confection in an amount of at least 0.15 wt%, relative to the total weight of said confection, more preferably at least 0.20, even more preferably at least 0.25, most preferably at least 0.30 wt%. Preferably, the emulsifier is present in the frozen confection in an amount of at most 1.00 wt%, more preferably at least 0.70 wt%, most preferably at least 0.50 wt%.

The term "fiber" as used herein, refers to an elongated object comprising microfibrils of cellulose, the fiber having a length (major axis) and a width (minor axis) and having length to width ratio of preferably at least 5, more preferably at least 10, or most preferably at least 15, as observed and measured by a high-resolution scanning electron microscope ("SEM").

Citrus fibers are fibers contained by and obtained from the fruits of the citrus family. The citrus family is a large and diverse family of flowering plants. The citrus fruit is considered to be a specialized type of berry, characterized by a leathery peel and a fleshy interior containing multiple sections filled with juice filled sacs. Common varieties of the citrus fruit include oranges, sweet oranges, clementines, kumquats, tangerines, tangelos, satsumas, mandarins, grapefruits, citrons, pomelos, lemons, rough lemons, limes and leech limes. The citrus fruit may be early-season, mid-season or late-season citrus fruit. Citrus fruits also contain pectin, common in fruits, but found in particularly high concentrations in the citrus fruits. Pectin is a gel-forming polysaccharide with a complex structure. It is essentially made of partly methoxylated galacturonic acid, rhamnose with side chains containing arabinose and galactose, which are linked through a glycosidic linkage. The pectin content of the citrus fruit may vary based on season, where ripe fruit may contain less pectin than unripe fruit.

Citrus fiber is to be distinguished from citrus pulp, which are whole juice sacs and are sometimes reffered to as citrus vesicles, coarse pulp, floaters, citrus cells, floating pulp, juice sacs, or pulp. Citrus fiber is also to be distinguished from citrus rag, which is a material containing segment membrane and core of the citrus fruit.

The citrus fibers are typically obtained from a source of citrus fibers, e.g. citrus peel, citrus pulp, citrus rag or combinations thereof. Moreover, the citrus fibers may contain the components of the primary cell walls of the citrus fruit such as cellulose, pectin and hemicelluloses and may also contain proteins.

Preferably, the citrus fibers used in accordance with the invention did not undergo any substantial chemical modification, i.e. said fibers were not subjected to chemical modification processes, such as, for example, esterification, derivatization, substituent addition, massive molecular breakdown, enzymatic modification and combinations thereof.

Preferably, the citrus fibers used in accordance with the invention have a crystallinity above 10% as measured on a dried (less than 20 wt% water content relative to the content of fibers) sample by X-ray diffraction method (Seagal method), more preferably at least 30%. Preferably, said crystllinity is between 10% and 60%.

The length of the citrus fibers used in accordance with the invention is preferably at least 0.5 µm, more preferably at least 1 µm. The width of the citrus fibers is preferably at most 100 nm, more preferably at most 50 nm, most preferably at most 15 nm.

Preferably, the citrus fibers are present in the frozen confection of the invention in an amount of between 0.1 and 5.0 wt% relative to the total weight of the confection, more preferably between 0.3 and 3.0 wt%, most preferably between 0.5 and 1.5 wt%.

The stabilizer used in accordance to the invention may further contain plant extrudates such as gum arabic, gum ghatti, gum karaya, gum tragacanth; seed gums such as locust bean gum, guar gum, tara gum, psyyllium seed gum, quince seed gum or tamarind seed gum; konjac mannan; seaweed extracts such as agar, alginates, carrageenan or furcelleran; pectins such as low methoxyl or high methoxyltype pectins; and microbial gums such as extran, xanthan or a glucan, e.g. β-1,3-glucan. If the further component is present, preferably its amount is between 5 and 40 wt% relative to the amount of citrus fibers, more preferably between 10 and 30 wt%, most preferably between 15 and 25 wt%.

In one embodiment, the stabilizer is a composition consisting of the emulsifier, the citrus fibers and a hydrocolloid chosen from the group consisting of alginates, pectin, gelatin, gum acacia, guar gum, locust bean gum, carrageenan, xanthan gum, cellulose derivates and mixtures thereof. Preferably, the hydrocolloid is present in an amount of between 5 and 40 wt% relative to the amount of citrus fibers, more preferably between 10 and 30 wt%, most preferably between 15 and 25 wt%.

Preferably, the stabilizer is present in the frozen confection of the invention in an amount of between 0.1 and 10.0 wt% relative to the total weight of the frozen confection, more preferably of between 0.3 and 7.0 wt%, most preferably of between 0.5 and 5.0 wt%.

The EM:CF ratio is between 0.25 and 1.00.

Preferably, the ratio EM:CF is more than 0.30, more preferably at least 0.33, even more preferably at least 0.36, most preferably at least 0.39. The inventors surprisingly observed that frozen confections having such ratio, may maintain a pleasant feeling due to a delayed melting and reduced ice crystals formation; moreover they succeed in maintaining a beautiful shape and appearance which may lead to an improvement of product's value. It was also observed that the RFFC of the invention may have an optimal viscosity and extrusion capacity to allow for an optimal processing thereof.

The frozen confection of the present invention is a RFFC, meaning that said confection contains at most 5.50 wt% of fat, preferably at most 5.25 wt%. The amount of fat is between 1.50 and 5.50 wt%, most preferably between 2.00 and 5.00 wt%. The inventors observed that it is important to have the correct amount of fat in the RFFC of the invention in order to achieve optimum benefits. The fat phase of the inventive RFFC may be modified or unmodified vegetable and/or animal fats. The fat may contain a fat which is liquid (typically referred to as "oil") and a fat which is solid (typically referred to as "hardstock fat") at the freezing temperature. Non-limiting examples of solid fats include butter fat and chocolate fat, e.g. cacao butter; shea butter; sal butter; chicken fat; beef tallow; milk fat; lard; butyric fat and mixtures thereof. Non-limiting examples of liquid fats (or oils) include both triglyceride oils and diglyceride oils. Examples of liquid fats that may be used in the present invention include without limitation various modified or unmodified vegetable and animal oils, such as palm oil, avocado oil, mustard oil, flaxseed oil, grape oil, peanut oil, coconut oil, olive oil, thistle oil, grape kernel oil, sesame oil, soybean oil, sunflower oil, linseed oil cotton oil, rapeseed oil, low erucic rapeseed oil (Canola), corn oil, rice oil, safflower oil, kapok oil, sesame oil, evening primrose oil, fish oil and train (whale) oil and mixtures thereof. The above fats and oils may be modified by subjecting them to various treatments, examples thereof including without limitation hydrogenation, fractionation and/or trans-esterification.

The RFFC of the invention may contain other compounds such as sweeteners, colorings and/or flavorings. Sweeteners commonly used include glucose, corn syrup or corn syrup solids having a dextrose equivalent ('DE') varying from about 20 to about 65, mono and di-saccharide sugars, such as dextrose, fructose, sucrose and lactose; sugar alcohols (also known as polyols or polyhydrie alcohols), such as erythritol, arabitol, glycerol, xylitol, sorbitol, mannitol, laetitol, maltitol, hydrogenated starch hydrosylate (HSH) - also known as polyglycitol, isomalt and palatinit and combinations thereof. The flavorings (flavors) are not limited as long as they give desired fragrance to the RFFC, and non-limiting examples thereof include vanilla, chocolate, coffe, strawberry, apple, orange, grape, cinnamon, sweet melon, banana, peach, mango, mint and lemon. The flavorings may be used independently, or two or more kinds may be used in combination. Further, the RFFC can optionally include fruit or fruit pieces, nuts or candies.

The RFFC of the invention may also contain proteins preferably extracted from the liquid milk (whole - skimmed); cream; milk powder (whole - skimmed); milk protein concentrate (MPC); liquid whey; whey powder; whey powders concentrated (WPC); whey powders isolates (WPI); buttermilk (liquid or powder); milk replacers (combination of various milk components); caseinates; gelatin; vegetable proteins (e.g. from soya) and mixtures thereof.

Preferably, the RFFC of the invention has a freezing point between -3 and -8 °C, more preferably between -3 and -6 °C.

Preferably, the RFFC of the invention contains ice crystals having a mean diameter of between 40 and 85 microns, more preferably between 50 and 80 microns, most preferably between 60 and 75 microns. Preferably, at most 65 % a of the ice crystals in said products have a diameter greater than 60 microns, more preferably at most 60%, most preferably at most 50%. By diameter of an ice crystal is herein understood the largest dimension of the crystal measurable with an optical microscope equipped with graticule. By mean diameter is herein understood the mean of at least 150 diameters, more preferably at least 300 diameters. It was observed that an RRFC having such small ice crystalls may have improved organoleptic proprerties and are perceptible in a highly agreeable manner to the consumer.

Preferably, after being initially frozen at -20 °Cthe RFFC of the invention has a meltdown time, i.e. the timenecessary to melt 30 grams of the RFFC at a temperature of 29 °C, of at least 50 min,more preferably at least 60 min, even more preferably at least 70 min, yet even more preferably at least 90 min,most preferably at least 100 min.

Preferably, the RFFC of the invention has an extrusion capacity of at least 30 g, more preferably at least 40 g, most preferably of at least 50 g. By "extrusion capacity" is herein understood the weight average of an RFFC sample measured during ice cream production at freezer output of -5°C and extruded vertically downwards at room temperature through a shaped nozzle until it breaks under its own weight.

The RFFC can be produced by any of the known processes for making frozen confections such as the one discolsed in US 5,215,777.

In one embodiment, the RFFCof the the invention is an ice cream. As used herein, "ice cream" is intended to include ice cream and frozen desserts products such as ice cream bars, bulk ice creams, ice cream sandwiches, ice cream cakes, as well as ice milk products, milk shakes, frozen yoghurt products and the like.

In another embodiment, the RFFC of the invention is a hard ice cream. The "hard ice cream" is a frozen confection which is in the form of an end product obtained through a well-known, 'hardening process' and which is distributed while in a frozen state at approximately -20°C, and placed in a freezing cabinet and sold as a commodity at a store (commercial product).

In yet another embodiment, the RFFC of invention is a soft ice cream. The "soft ice cream" is a frozen confection which is commonly called soft-serve ice cream and which is not distributed but is made with a common frozen dessert production apparatus without a 'hardening process' in e.g. a store and sold at the store face to face to consumers as a prepared food product at approximately -4 to-14°C directly taken out of the frozen dessert production apparatus.

### METHODS OF MEASUREMENT

- Viscosity measurements: 24 h aged samples were measured at 5°C with a Brookfield viscometer (Model DV-1+; Brookfield Engineering Laboratories, Inc., MA). The viscometer was operated at 20 rpm using an appropriate spindle (e.g. spindle number 4) and results were recorded in cp after 30 sec rotation.
- Extrusion capacity measurements: evaluate the performance and cohesiveness of the RFFC at the output of a freezer in current production conditions. The "extrusion capacity" is determined by weighing an RFFC sample frozen at -5°C and extruded vertically downwards at room temperature through a shaped nozzle until it breaks under its own weight. For the final value of the extrusion capacity, three measurements were taken and averaged. The nozzle had a hollow cylindrical shape with an inner diameter of about 2.4 cm. The RFFC was delivered to the nozzle in an amount of 30 to 50 liters/hour.
- Meltdown measurements: are carried out by weighing continuously, during a given time, the quantity of the product melting and dripping from a sample of known mass at constant temperature and constant humidity. The meltdown kinetic measure is carried out in a cabinet at a constant temperature of 29°C and humidity (typically 80% to 95%). After being initially frozen at -20°C, ice cream samples with a controlled weight of 280g± 10g each, were placed on a wire mesh (1cm × 1cm) fixed horizontally over a balance (Mettler PJ 600). The measurement is carried out in continuous mode during three hours. The balances were connected to a computer, which allows recording meltdown kinetic curves: melted mass = f(time). The time (T30) at the end of which 30 g of product melted was recorded.
- Ice crystal size and **distribution** measurements: the size of ice crystals is estimated by optical microscopy. A sample of about 1 mm diameter and 1 to 2 mm length was crushed between two blades in the presence of a solution of the acetate and a solution of colored heptane (to enhance contrast). This preparation was then viewed by means of a microscope (Olympus BH-2) placed in a cabinet at -18°C. A camera (Exwave HAD Sony) connected to the microscope (objective ×10) allowed to visualize fields on a computer screen and to take pictures. Approximately 20 different pictures were taken. A picture analysis software (Pegasus pro) allowed to measure ice crystal diameters. For one measurement, the diameters of 300 crystals averaged. The diameter of an ice crystal is herein understood as the largest dimension of the crystal. Preferably a sample preparation such as disclosed in US 5,215,777is used.

The invention will now be described with the help of the following examples and comparative experiments, without being however limited thereto.

### EXAMPLES 1-6:

The following ingredients were used in a powder form: sucrose; skimmed milk; emulsifier mono- and diglyceride; citrus fibers; and a hydrocolloid composition consisting of guar gum, locust bean gum and carrageenan. The hydrocolloid composition corresponds to the hydrocolloid part of Lygomme FM 4753 (sold by Cargill), which is a commercial stabilizer currently used in RFFC, having a ratio of 75% emulsifier and 35% of a mixture of guar gum, locust bean gum and carrageenans. Other ingredients included water; glucose syrup 40 DE; and concentrated butter fat.

The powders were blended together and subsequently dispersed in water. The glucose syrup and the fat were heat melted at 45 °C and the melt was mixed with the water dispersion and heated at 65 °C for 15 minutes. The mix was subsequently homogenized at 200 bars in 2 steps using a homogenizer (APV). The first step was set at 170 bars while the second one at 30 bars.

The homogenized mix was pasteurized at 85 °C for 30 seconds and after being cooled down to 5 °C it was aged at this temperature for 16 hours. The aged homogenized mix was then frozen at -5 °C in a continuous freezer (WCB), then hardened in a freezing tunnel at-40°C and finally stored at -20°C.

The percentages of the ingredients are presented in Table 1.

### COMPARATIVE EXPERIMENTS 7-8:

The same ingredients as presented above were used in the quantities presented in Table 2.

**Table 1**

| Ingedient / Example | E1 | E2 | E3 | E4 | E5 | E6 |
|---|---|---|---|---|---|---|
| | (%) | | | | | |
| Water | 66,0 | 65,8 | 65,5 | 65,8 | 67,5 | 67.5 |
| Sucrose | 12,0 | 12,0 | 12,0 | 12,0 | 12,0 | 12,0 |
| Glucose syrup | 6,0 | 6,0 | 6,0 | 6,0 | 6,0 | 6,0 |
| Skimmed milk | 10,0 | 10,0 | 10,0 | 10,0 | 1,0 | 10,0 |
| Butter | 5,0 | 5,0 | 5,0 | 5,0 | 3,0 | 3,0 |
| Emulsifier(EM) | 0,3 | 0,3 | 0,3 | 0,3 | 0,3 | 0,3 |
| Hydrucolloids | 0,2 | 0,2 | 0,2 | - | 0,2 | |
| Citrus Fiber (CF) | 0,5 | 0,75 | 1,0 | 1,0 | 1,0 | 1,2 |
| EM:CF | 0,6 | 0,4 | 0,3 | 0,3 | 0,3 | 0,25 |

**Table 2**

| Ingredient / Example | CE7 | CE8 |
|---|---|---|
| | (%) | |
| Water | 63,5 | 66,5 |
| Sucrose | 12,0 | 12,0 |
| Glucose syrup | 6,0 | 6,0 |
| Skimmed milk | 10,0 | 10,0 |
| Butter | 8,0 | 5,0 |
| Emulsifier (EM) | 0,3 | 0,3 |
| Hydrocolloids | 0,2 | 0,2 |
| Citrus Fiber (CF) | - | - |
| EM:CF | - | - |

### RESULTS:

The products of the Examples and Comparative Experiments were analyzed in terms of viscosity, extrusion capacity, meltdown and ice crystals' (IC) size and distribution. The results are presented in Table 3.

**Table 3**

| | E1 | E2 | E3 | E4 | E5 | E6 CE7 | | CE8 |
|---|---|---|---|---|---|---|---|---|
| Viscosity (cP) | 2500 | 4000 | 7000 | 1200 | 6000 | 2000 | 300 | 300 |
| Extrusion capacity (g) | 40 | 45 | 42 | 45 | 42 | 48 | 29 | 26 |
| Meltdown (mm) (T30g) | 95 | 100 | 100 | 98 | 80 | 98 | 40 | 40 |
| IC mean diameter (µm) | 68 | 68 | 60 | 68 | 68 | 69 | 73 | 72 |
| IC greater than 60 µm (%) | 58 | 38 | 58 | 62 | 38 | 68 | 70 | 71 |

The results show that the viscosity of the examples was in general higher than that of the comparative experiments showing a strong activity of the fiber. It was however observed that thanks to the correct combination and amounts of the used ingredients, it was possible to achieve a substantial reduction in the viscosity for the formulations containing citrus fibers than those reported by Devisoglu et al. (a reduction of about 300% was achieved with the formulations of the invention). Moreover, a substantial improvement was achieved in the palatal solubility and reduction in the average dimensions of ice crystals. The extrusion cap[acity was also improved for the RFFC of the invention. In particular the production conditions and the shape retention of the RFFC of the invention were improved over those of the comparative experiments.

Meltdown was significantly improved for the RFFC of the invention even for low fat contents while the meltdown of the comparative experiments was far from being satisfactory. In particular the reduced meltdown when exposed to temperature fluctuations during storage and distribution helps in retaining the shape of the RFFC of the invention better than the known ones, which is particularly favorable for novelty products.

Surprisingly, the re-crystallization by accretion was also improved for the RFFC of the invention. Small variations of temperature (heat shocks) generate a drop in the viscosity, with a consequence that the mobility of the ice crystals increase and they can move closer to each other. When the temperature decreases again the liquid water freezes around the ice crystals causing them to coalesce. After several such heat shock cycles, larger ice crystals are formed. It was observed that this phenomenon was reduced for the RFFC of the invention which have a substantially homogenous structure without any crystals of ice perceptible to the consumer.

## Claims

1. A frozen confection comprising a stabilizer and between 1.50 and 5.50 wt% fat relative to the total weight of the confection, wherein the stabilizer contains an emulsifier in an amount of between 0.1 and 1.0 wt% relative to the total weight of said frozen confection and a citrus fiber wherein the emulsifier and the citrus fiber are in a weight ratio EM:CF of between 0.25 and 1.00.

2. The frozen confection according to claim 1 wherein the amount of citrus fiber is between 0.1 and 5.0 wt% relative to the total weight of the confection, more preferably between 0.3 and 3.0 wt%, most preferably between 0.5 and 1.5 wt%.

3. The frozen confection according to any one of the preceding claims wherein the citrus fibers are un-modified citrus fibers.

4. The frozen confection according to any one of the preceding claims wherein the stabilizer is a composition consisting of the emulsifier, the citrus fibers and a hydrocolloid chosen from the group consisting of alginates, pectin, gelatin, gum acacia, guar gum, locust bean gum, carrageenan, xanthan gum, cellulose derivates and mixtures thereof.

5. The frozen confection according to any one of the preceding claims wherein the amount of stabilizer is between 0.1 and 10.0 wt% relative to the total weight of the frozen confection.

6. The frozen confection according to any one of the preceding claims wherein the fat is milk fat.

7. The frozen confection according to any one of the preceding claims containing ice crystals having a mean diameter of between 40 and 85 microns, more preferably between 50 and 80 microns, most preferably between 60 and 75 microns.

8. The frozen confection according to any one of the preceding claims having a melt-down time necessary to melt 30 grams of the frozen confection at a temperature of 29 °C of at least 50 min, said frozen confection being initially frozen at -20 °C.

9. The frozen confection according to any one of the preceding claims having an extrusion capacity of at least 30 g.

10. The frozen confection according to any one of the preceding claims wherein the emulsifier is chosen from the group consisting of monoglycerides, distilled monoglycerides, diglycerides, lecithin, modified lecithin, polysorbate, sodium stearyl lactylate, propylene glycol monostearate, succinylated monoglycerides, succinylated dyglicerides, propylene glycol monoesters of fatty acids, propylene glycol diesters of fatty acids, polyglycerol esters of fatty acids, lactylic esters of fatty acids, glyceril monostearate, propylene glycol monopalmitate, glycerol lactopalmitate, glycerol lactostearate and mixtures thereof.

11. The frozen confection according to any one of the preceding claims having an overrun of 20 to 150%, preferably beween 70 and 120 %, more preferably between 90 and 100 %.

12. The frozen confection according to any one of the preceding claims wherein said confection is ice cream, frozen dessert, milk ice, frozen yoghurt, sherbet, slushes, frozen custard, water ice, granitas, frozen purees or sorbet.

## Patentansprüche

1. Gefrorenes Konfekt, umfassend einen Stabilisator und zwischen 1,50 und 5,50 Gew.-% Fett, bezogen auf das Gesamtgewicht des Konfekts, wobei der Stabilisator einen Emulgator in einer Menge zwischen 0,1 und 1,0 Gew.-%, bezogen auf das Gesamtgewicht des gefrorenen Konfekts und eine Citrusfaser enthält, wobei der Emulgator und die Citrusfaser in einem Gewichtsverhältnis EM:CF zwischen 0,25 und 1,00 vorliegen.

2. Gefrorenes Konfekt nach Anspruch 1, wobei die Menge an Citrusfaser zwischen 0,1 und 5,0 Gew.-%, bezogen auf das Gesamtgewicht des Konfekts, mehr bevorzugt zwischen 0,3 und 3,0 Gew.-%, am meisten bevorzugt zwischen 0,5 und 1,5 Gew.-% liegt.

3. Gefrorenes Konfekt nach einem der vorstehenden Ansprüche, wobei die Citrusfasern unmodifizierte Citrusfasern sind.

4. Gefrorenes Konfekt nach einem der vorstehenden Ansprüche, wobei der Stabilisator eine Zusammensetzung ist, die aus dem Emulgator, den Citrusfasern und einem Hydrocolloid besteht, das ausgewählt ist aus der Gruppe bestehend aus Alginaten, Pektin, Gelatine, Gummiarabikum, Guargummi, Johannisbrotgummi, Carrageenan, Xanthangummi, Cellulosederivaten und Mischungen davon.

5. Gefrorenes Konfekt nach einem der vorstehenden Ansprüche, wobei die Menge an Stabilisator zwischen 0,1 und 10,0 Gew.-%, bezogen auf das Gesamtgewicht des gefrorenen Konfekts, beträgt.

6. Gefrorenes Konfekt nach einem der vorstehenden Ansprüche, wobei das Fett Milchfett ist.

7. Gefrorenes Konfekt nach einem der vorstehenden Ansprüche, das Eiskristalle mit einem mittleren Durchmesser zwischen 40 und 85 Mikrometer enthält, mehr bevorzugt zwischen 50 und 80 Mikrometer, am meisten bevorzugt zwischen 60 und 75 Mikrometer.

8. Gefrorenes Konfekt nach einem der vorstehenden Ansprüche, das eine Schmelzzeit, die zum Schmelzen von 30 Gramm des gefrorenen Konfekts bei einer Temperatur von 29 °C notwendig ist, von mindestens 50 min aufweist, wobei das gefrorene Konfekt anfänglich bei -20 °C gefroren ist.

9. Gefrorenes Konfekt nach einem der vorstehenden Ansprüche, das eine Extrusionskapazität von mindestens 30 g aufweist.

10. Gefrorenes Konfekt nach einem der vorstehenden Ansprüche, wobei der Emulgator ausgewählt ist aus der Gruppe bestehend aus Monoglyceriden, destillierten Monoglyceriden, Diglyceriden, Lecithin, modifiziertem Lecithin, Polysorbat, Natriumstearyllactylat, Propylenglycolmonostearat, succinylierten Monoglyceriden, succinylierten Dygliceriden, Propylenglycolmonoestern von Fettsäuren, Propylenglycoldiestern von Fettsäuren, Polyglycerinestern von Fettsäuren, Lactylestern von Fettsäuren, Glycerilmonostearat, Propylenglycolmonopalmitat, Glycerollactopalmitat, Glycerollactostearat und Mischungen davon.

11. Gefrorenes Konfekt nach einem der vorstehenden Ansprüche, das einen Luftaufschlag von 20 bis 150 %, vorzugsweise zwischen 70 und 120 %, mehr bevorzugt zwischen 90 und 100 % aufweist.

12. Gefrorenes Konfekt nach einem der vorstehenden Ansprüche, wobei das Konfekt Speiseeis, gefrorenes Dessert, Milcheis, gefrorener Joghurt, Fruchteis, Slushes, gefrorener Pudding, Wassereis, Granitas, gefrorene Pürees oder Sorbet ist.

## Revendications

1. Confiserie congelée comprenant un stabilisant et au plus entre 1,50 et 5,50 % en poids de matière grasse par rapport au poids total de la confiserie, dans lequel le stabilisant contient un émulsifiant en une quantité comprise entre 0,1 et 1,0 % en poids par rapport au poids total de ladite confiserie congelée et une fibre d'agrume dans laquelle l'émulsifiant et la fibre d'agrume sont dans un rapport pondéral EM:CF compris entre 0,25 et 1,00.

2. Confiserie congelée selon la revendication 1 dans laquelle la quantité de fibre d'agrume est comprise entre 0,1 et 5,0 % en poids par rapport au poids total de la confiserie, plus préférablement entre 0,3 et 3,0 % en poids, le plus préférablement entre 0,5 et 1,5 % en poids.

3. Confiserie congelée selon l'une quelconque des revendications précédentes dans laquelle les fibres d'agrume sont des fibres d'agrume non modifiées.

4. Confiserie congelée selon l'une quelconque des revendications précédentes dans laquelle le stabilisant est une composition constituée de l'émulsifiant, des fibres d'agrume et d'un hydrocolloïde choisi dans le groupe constitué d'alginates, pectine, gélatine, gomme d'acacia, gomme de guar, gomme de caroube, carraghénane, gomme de xanthane, dérivés de cellulose et mélanges de ceux-ci.

5. Confiserie congelée selon l'une quelconque des revendications précédentes dans laquelle la quantité de stabilisateur est entre 0,1 et 10,0 % en poids par rapport au poids total de la confiserie congelée.

6. Confiserie congelée selon l'une quelconque des revendications précédentes dans laquelle la matière grasse est de la matière grasse de lait.

7. Confiserie congelée selon l'une quelconque des revendications précédentes contenant des cristaux de glace ayant un diamètre moyen compris entre 40 et 85 micromètres, plus préférablement entre 50 et 80 micromètres, le plus préférablement entre 60 et 75 micromètres.

8. Confiserie congelée selon l'une quelconque des revendications précédentes ayant un temps de fusion nécessaire pour fondre 30 grammes de la confiserie congelée à une température de 29 °C d'au moins 50 min, ladite confiserie congelée étant initialement congelée à -20 °C.

9. Confiserie congelée selon l'une quelconque des revendications précédentes ayant une capacité d'extrusion d'au moins 30 g.

10. Confiserie congelée selon l'une quelconque des revendications précédentes dans laquelle l'émulsifiant est choisi dans le groupe constitué de monoglycérides, monoglycérides distillés, diglycérides, lécithine, lécithine modifiée, polysorbate, stéaryl-lactylate de sodium, monostéarate de propylène glycol, monoglycérides succinylés, diglycérides succinylés, monoesters de propylène glycol d'acides gras, diesters de propylène glycol d'acides gras, esters de polyglycérol d'acides gras, esters lactyliques d'acides gras, monostéarate de glycéryle, monopalmitate de propylène glycol, lactopalmitate de glycérol, lactostéarate de glycérol et mélanges de ceux-ci.

11. Confiserie congelée selon l'une quelconque des revendications précédentes ayant un foisonnement de 20 à 150 %, de préférence entre 70 et 120 %, plus préférablement entre 90 et 100 %.

12. Confiserie congelée selon l'une quelconque des revendications précédentes dans laquelle ladite confiserie est une crème glacée, un dessert congelé, une glace au lait, un yaourt congelé, un sorbet laitier, des sloches, une crème anglaise congelée, une glace à l'eau, des granités, des purées congelées ou un sorbet.
